# EUROPÄISCHE PATENTANMELDUNG

(11) **EP 2 410 623 A2**
(43) Veröffentlichungstag der Anmeldung: **25.01.2012**
(21) Anmeldenummer: 11005633.0
(22) Anmeldetag: 09.07.2011
(51) Int. Cl.: H02G 1/04

(54) **Umlenkmodul und System zum Spannen eines Leiterseils auf Hochspannungsmasten**

(30) Priorität: 21.07.2010 DE 102010031722
(71) Anmelder: LTB Leitungsbau GmbH, 01139 Dresden (DE)
(72) Erfinder: Bartsch, Harry, 01665 Klipphausen (DE); Janzen, Thomas, 01458 Ottendorf-Okrilla (DE); Hoffmann, Rainer, 04895 Koßdorf (DE)
(74) Vertreter: Fritsch, Klaus

(57) **Zusammenfassung**

Die Erfindung betrifft ein Umlenkmodul (12, 14, 16, 18, 40) für ein Hochspannungsleiterseil (28, 56, 68, 80, 100), umfassend einen bogenförmigen Umlenkkanal (57-58, 64, 78), welcher derart ausgeprägt ist, dass ein Leiterseil (28, 56, 68, 80, 100) in diesem (57-58, 64, 78) längs seiner Erstreckung beweglich führbar ist, einen Modulhalter (50) mit Verbindungsvorrichtung, welcher dafür vorgesehen ist, lösbar mit einem Hochspannungsmast (20, 22, 24, 54) verbunden zu werden und ein Distanzelement (44), durch welches eine mechanisch starre Verbindung zwischen Umlenkkanal (57-58, 64, 78) und Modulhalter (50) gebildet ist. Die Erfindung betrifft auch ein System (10) zum Spannen eines Leiterseils (28, 56, 68, 80, 100) auf Hochspannungsmasten, umfassend einen Hochspannungsmast (20, 22, 24, 54) und wenigstens ein erstes mit diesem verbundenes erfindungsgemäßes Umlenkmodul (12, 40).

## Beschreibung

Die Erfindung betrifft ein Umlenkmodul für ein Hochspannungsleiterseil und ein System zum Spannen eines Leiterseils auf Hochspannungsmasten.

Es ist allgemein bekannt, dass Hochspannungsleitungen, beispielsweise für eine Spannung von 110kV oder 380kV, üblicherweise als Freileitungen ausgeführt werden. Hierbei sind Leiterseile zwischen Hochspannungsmasten gespannt, welche - je nach Spannungsebene - einen Abstand von beispielsweise 100m bis 400m aufweisen. Die Leiterseile sind durch hängende Isolatoren mit den Traversen der Hochspannungsmaste verbunden. Stromversorgungssysteme sind in aller Regel dreiphasig ausgeführt, d.h. ein Leitersystem besteht aus drei Einzelleitern. Um eine für eine Freileitung benötigte Trasse möglichst optimal auszunutzen, sind häufig mehrere Leitersysteme - teilweise auch unterschiedlicher Spannungsebenen - an einem einzigen Mast montiert. Hinzu kommt noch ein Erdseil, welches über die Spitzen der jeweiligen Hochspannungsmaste geführt ist und welches als Blitzschutz dient.

Ein Freileitungsseil weist zur Reduktion des Skineffektes zumeist eine Vielzahl an Lagen von verdrillten Einzelleitern auf, wobei im Inneren des Leiterseils zur Erhöhung der Zugkraft eine Stahlseele eingeflochten ist und die diese umgebenden Leiterlagen aus Aluminium bestehen. Aufgrund dieses Aufbaus eines Leiterseiles ist insbesondere beim Transport und der Montage darauf zu achten, dass es nicht zu stark gebogen wird, weil sonst Beschädigungen des Seils auftreten würden. Als grober Richtwert kann angenommen werden, dass der minimale Biegeradius des Leiterseils nicht dessen 30-fachen Radius unterschreitet.

Zur weiteren Reduktion des Skineffektes ist es auch üblich, einen Leiter als mehrseiliges System aufzubauen, d.h. mehrere parallel z.B. in einem Quadrat mit 30cm - 50cm Kantenlänge und mit Abstandhaltern versehene angeordnete Leiterseile sind elektrisch parallel geschaltet, womit sich bei einem Leitersystem von 3 Phasen bereits 12 Einzelleiter ergeben. Dies erschwert in besonderer Weise den Bau einer derartigen Freileitung, weil gemäß dem Stand der Technik jedes Leiterseil einzeln auf den Hochspannungsmast gezogen wird.

Beim Spannen von Leiterseilen ist ein dünnes Zugseil vorgesehen, welches zuvor manuell längs des angestrebten Verlaufes des Leiterseiles zwischen den Hochspannungsmasten angeordnet wurde und welches an seinem rückwärtigen Ende mit dem zu spannenden und zumeist auf einer Rolle befindlichen Leiterseil verbunden ist. Der Spannvorgang wird durch eine Zugbewegung an dem Zugseil begründet, so dass das Leiterseil entsprechend hinterher gezogen wird und so seine gewünschte Lage an den Hochspannungsmasten einnimmt.

Nachteilig ist insbesondere, dass Hochspannungsmaste zumeist nur als Tragmaste ausgeführt sind, welche über ihre hängenden Isolatoren nicht in der Lage sind, horizontal auf das Leiterseil wirkende Kräfte aufzunehmen. Abspannmaste, welche aufgrund ihrer Isolatorenanordnung auch Horizontalkräfte der Leiterseile abfangen können, sind zumeist nur in einem sehr großen Abstand zueinander vorgesehen. Um diese Horizontalkräfte beim Spannvorgang nicht zu groß werden zu lassen, ist es entweder notwendig, die Rolle mit dem zu spannenden Freileitungsseil in einem sehr großen Abstand zum Hochspannungsmast anzuordnen, beispielsweise in einem Abstand größer 120m. Wenn dieser Platz nicht vorhanden ist, was öfters der Fall ist, muss ein behelfsmäßiger Abspannmast in unmittelbarer Nähe des betreffenden Hochspannungsmastes errichtet werden, welcher die horizontal auf den Hochspannungsmast wirkenden Seilkräfte beim Spannvorgang abfängt. Dies ist mit einem unverhältnismäßig hohen Aufwand verbunden.

Ausgehend von diesem Stand der Technik ist es Aufgabe der Erfindung, das Spannen von Leiterseilen für Hochspannungsleitungen zu vereinfachen.

Diese Aufgabe wird gelöst durch ein erfindungsgemäßes Umlenkmodul für ein Hochspannungsleiterseil, umfassend einen bogenförmigen Umlenkkanal, welcher derart ausgeprägt ist, dass ein Leiterseil in diesem längs seiner Erstreckung beweglich führbar ist, einen Modulhalter mit Verbindungsvorrichtung, welcher dafür vorgesehen ist, lösbar mit einem Hochspannungsmast verbunden zu werden und ein Distanzelement, durch welches eine mechanisch starre Verbindung zwischen Umlenkkanal und Modulhalter gebildet ist.

Die erfindungsgemäße Idee hierbei besteht darin, den Hochspannungsmast, über den das Leiterseil gespannt werden soll, durch temporäre Montage von Umlenkmodulen zu einem Abspannmast zu ertüchtigen, so dass dessen separate Errichtung entfällt. Der als Tragmast ausgeführte Hochspannungsmast als solcher ist durchaus in der Lage, Horizontalkräfte aufzunehmen, es ist lediglich der hängende Isolator, welcher durch seine hängende Befestigung an einem einzigen Punkt der Traverse des Mastes nicht in der Lage ist, auf das von ihm getragene Leiterseil wirkende Horizontalkräfte abzufangen. Dies wird erfindungsgemäß von den am Hochspannungsmast zu montierenden Umlenkmodulen bewirkt. Nach erfolgtem Spannen der gewünschten Leiterseile sind die Umlenkmodule dann wieder vom Hochspannungsmast zu entfernen.

Ein Umlenkmodul weist zunächst einen Umlenkkanal für das zu spannende Leiterseil auf. Dieser ist nötig, um das Leiterseil vom Fuß des Hochspannungsmastes zu der gewünschten Position im oberen Bereich führen zu können. Hierbei ist der Umlenkkanal derart auszuführen, dass das Leiterseil längs des Umlenkkanals relativ zum Hochspannungsmast bewegbar ist. Hierdurch wird ein Ziehen des Seils durch den Umlenkkanal ermöglicht. Der Umlenkkanal ist zudem in einem Bogenradius auszuführen, durch welchen eine zu starke Biegung des Leiterseils vermieden ist. Eine Biegung von ca. 90° in einem Umlenkkanal ist hierbei als typische Größe anzusehen, welche eine besonders flexible Seilführung längs des Hochspannungsmastes ermöglicht.

Der Modulhalter mit Verbindungsvorrichtung dient dazu, eine temporäre und kraftschlüssige Verbindung mit dem Hochspannungsmast herzustellen. Dies kann beispielsweise eine Schraub-, Klemm- und/oder Steckverbindung sein, welche besonders einfach wieder lösbar sind. Hierbei erweist es sich als günstig, dass Hochspannungsmaste zumeist als Gitterkonstruktionen mit einer Vielzahl von Streben ausgeführt sind. Eine Strebe kann nämlich besonders einfach von einem Verbindungselement in ihrem Durchmesser umschlossen werden, so dass eine einfache und sichere Verbindung realisierbar ist. Selbstverständlich sind auch mehrere Verbindungspunkte eines Modulhalters mit dem Hochspannungsmast möglich, um so eine besonders stabile Verbindung zu realisieren.

Das Distanzelement dient dazu, einen Abstand vom Hochspannungsmast zum Umlenkkanal zu gewährleisten und so ein mögliches Berühren des zu spannenden Leiterseiles mit dem Hochspannungsmast zu verhindern.

In einer besonders bevorzugten Ausgestaltung des erfindungsgemäßen Umlenkmoduls ist der Umlenkkanal zumindest abschnittsweise durch einen jeweiligen Segmentabschnitt einer frei drehbaren Rolle mit rillenförmiger Vertiefung zur Führung des Leiterseils längs ihres Umfangs gebildet.

Eine Bewegung eines Leiterseils durch den zumindest abschnittsweise aus der rillenförmigen Vertiefung gebildeten Umlenkkanal ist durch eine Drehbewegung der Rolle besonders einfach und reibungsarm realisierbar. Auch wenn bei einer Drehbewegung der Rolle keine Relativbewegung zu einem über die Rolle geführten Leiterseil erfolgt, ist dieses als Bewegung des Leiterseils durch einen Umlenkkanal anzusehen.

In einer weiteren Ausgestaltung des erfindungsgemäßen Umlenkmoduls sind mehrere parallel in einer gemeinsamen Ebene und längs eines Bogens angeordnete frei drehbare Rollen vorgesehen, so dass längs des Bogens ein polygonähnlicher Umlenkkanal für ein Leiterseil gebildet ist.

Durch die Verwendung einer Vielzahl, bogenähnlich angeordneter kleiner Rollen ist im Vergleich zu einer einzigen großen Rolle, welche wenigstens den Mindestdurchmesser von 30 mal dem Leiterseildurchmesser aufweisen muss, um eine Beschädigung des Leiterseils bei Spannvorgang zu vermeiden, eine erhebliche Gewichtseinsparung realisiert. Hierdurch wird die zwangsläufig manuell zu erfolgende Montage der Umlenkmodule am Hochspannungsmast deutlich vereinfacht. Die Approximation des Mindestradius des Umlenkkanals mit einem Rollenpolygon vermeidet in vergleichbarer Weise eine Beschädigung des Leiterseiles bei der Montage, wie ein exakt kreissegmentförmig verlaufender Umlenkkanal desselben Radius. Die Anzahl der Rollen beträgt, je nach zu approximierendem Bogenradius und Rollendurchmesser beispielsweise 3 bis 12, wobei ein kleinerer Rollendurchmesser eine eher erhöhte Zahl an Rollen bedingt.

Entsprechend einer weiteren erfindungsgemäßen Variante des Umlenkmoduls sind mehrere parallel angeordnete Umlenkkanäle vorgesehen. Dies ermöglicht insbesondere das synchrone Ziehen von mehreren Leiterseilen jeweils durch einen der Umlenkkanäle. Die Parallelität der Umlenkkanäle ist insbesondere für die parallele Führung von mehreren Leiterseilen von den am Mastfuß vorzusehenden Leiterseilenrollen in den oberen Bereich des Mastes hilfreich, wo dann die Einführung der Seile in den gewünschten Spannpositionen erfolgt.

In einer besonderen Ausführungsform des erfindungsgemäßen Umlenkmoduls sind längs derselben Drehachse angeordnete frei drehbare Rollen benachbarter Umlenkkanäle durch eine gemeinsame frei drehbare Rolle mit einer entsprechenden Anzahl an parallelen rillenförmiger Vertiefungen substituiert.

Hierdurch wird sowohl eine weitere Gewichtseinsparung als auch eine Reduktion der Anzahl der temporär zu montierenden Komponenten erreicht. Zudem ist der Abstand zwischen benachbarten Umlenkkanälen weiter reduzierbar, so dass sich eine vereinfachte Leiterseilführung vom Fuß des Hochspannungsmastes in den oberen Bereich ergibt. Bei mehreren synchron zu führenden Leiterseilen ist zum Beispiel eine Drehung der Ebene der parallel geführten Leiter, beispielsweise um 90°, besonders problemlos zu realisieren, wenn diese möglichst dicht beieinander angeordnet sind. Durch das synchrone Ziehen der einzelnen Leiterseile ist keine freie Drehbarkeit jeder einzelnen Rolle gefordert, so dass durch das Zusammenfassen von Einzelrollen keine Einschränkung der Funktionalität gegeben ist.

Gemäß einer besonders bevorzugten Umlenkmodulvariante ist das Distanzelement anpassbar, so dass ein wählbarer Abstand und/oder eine wählbare Ausrichtung des Umlenkkanals zum Modulhalter realisierbar sind.

Dies ermöglicht eine besonders einfache Montage der Umlenkmodule am Mast. Die gewünschte Leiterseilführung vom Fuß des Hochspannungsmastes in dessen oberen Bereich erfordert nämlich die Anordnung der Umlenkkanäle der Umlenkmodule an ganz bestimmten Positionen relativ zum Mast. Andererseits lassen sich die Modulhalter der Umlenkmodule nur am Hochspannungsmast, und dies insbesondere an dessen Gitterstreben, montieren, wobei teilweise auch nur eine bestimmte, aber für die Leiterseilführung nicht ideale Position bzw. Orientierung möglich ist.

Eine feststellbare teleskopähnliche Verlängerung eines Distanzelementes oder aber auch ein arretierbares Drehgelenk sind Vorrichtungen, die eine entsprechend hohe Flexibilität bei der Montage der Umlenkmodule bzw. bei der Leiterseilführung ermöglichen. Aber auch das feste Montieren von zusätzlichen Zwischen-, Verlängerungs- oder Knickstücken in das Distanzelement erreicht denselben Zweck.

Die Aufgabe wird auch gelöst durch ein System zum Spannen eines Leiterseils auf Hochspannungsmasten, umfassend einen Hochspannungsmast und wenigstens ein erstes mit diesem verbundenes Umlenkmodul nach einem der Ansprüche **1** - **6.** Die entsprechenden Vorteile eines solchen Systems wurden bereits eingangs erläutert.

In einer weiteren Ausgestaltungsform des erfindungsgemäßen Systems ist das erste Umlenkmodul derart am Hochspannungsmast angeordnet, dass das erste Ende des Umlenkkanals des ersten Umlenkmoduls in der gedachten Verlängerung des zu spannenden Leiterseils in seiner gewünschten Position am Hochspannungsmast ausgerichtet ist und das zweite Ende des Umlenkkanals vorzugsweise in vertikaler Ausrichtung.

So wird das zu spannende Leiterseil von der Leiterseilrolle kommend zunächst vertikal in das zweite Ende des Umlenkkanals eingeführt, dort etwa um 90° umgelenkt und dann am ersten Ende des Umlenkkanals in Zugrichtung etwas vor dem Isolator, welcher das Leiterseil am Mast tragen soll, in etwa in horizontaler Richtung ausgeführt. Beim weiteren Spannvorgang wird das Leiterseil dann mit dem gewünschten Durchhang zum benachbarten Hochspannungsmast an die entsprechend vergleichbare Position gezogen. Durch diese Anordnung nimmt das erste Umlenkmodul nahezu die gesamte horizontale Zugkraft vom Isolator, womit ein problemloses Spannen des Leiterseils ermöglicht ist.

Entsprechend einer weiteren Ausführungsform des erfindungsgemäßen Systems sind weitere Umlenkmodule derart am Hochspannungsmast angeordnet, dass ein mit einer Zugkraft beaufschlagtes Leiterseil vom Fuß des Hochspannungsmastes mastnah zu einer im oberen Bereich befindlichen Traverse und von dort längs der Traverse zum zweiten Ende des Umlenkkanals des ersten Umlenkmoduls beweglich führbar ist.

Durch die Anordnung der weiteren Umlenkmodule wird eine Seilführung vom Fuß des Hochspannungsmastes zum ersten Umlenkmodul gewährleistet. Dies ist sehr abhängig von der Form des Mastes. In einer Vielzahl der Fälle dürfte zunächst ein Umlenkmodul am Fuße des Hochspannungsmastes sinnvoll sein, um das waagerecht von der Leiterseilrolle abgewickelte Leiterseil in eine mastnahe Vertikale umzulenken. In Höhe der Traverse, auf welcher das Leiterseil eingeführt werden soll, ist ein weiteres Umlenkmodul vorzusehen, welches das Leiterseil in den äußeren Bereich der Traverse führt. Dort ist wiederum ein Umlenkmodul vorzusehen, welches das Leiterseil aus vertikaler Richtung, also von oben oder unten, dem ersten Umlenkmodul zuführt.

Dies ist jedoch nur ein exemplarisches Beispiel für eine Vielzahl von möglichen Anordnungsvarianten der weiteren Umlenkmodule. So ist auch eine Anordnung vorgesehen, in welcher die Umlenkkanäle aller Umlenkmodule für ein jeweiliges Leiterseil in derselben Ebene angeordnet sind. In diesem Fall verläuft auch die Führung der jeweiligen Leiterseile in parallelen Ebenen. Ein Aufspannen der Leiterseile mit einem Zugseil in den oberen Bereich des Hochspannungsmastes wird dadurch besonders vereinfacht.

In einer besonders bevorzugten Ausgestaltung des erfindungsgemäßen Systems sind Umlenkmodule mit mehreren parallel angeordneten Umlenkkanälen vorgesehen, so dass mehrere an ihrem jeweiligen einen Ende miteinander verbundene Leiterseile gemeinsam über die Umlenkmodule ziehbar sind.

Gerade das synchrone Ziehen von mehreren Leiterseilen, welche wie eingangs erwähnt zur Reduktion des Skineffektes in ihrer endgültigen Anordnung beispielsweise im Quadrat oder Dreieck in einem Abstand von beispielsweise 30cm - 50cm angeordnet sind, führt zu einer erheblichen Reduktion des erforderlichen Aufwandes beim Spannen der Leiterseile.

In bevorzugter Weise sind die synchron zu ziehenden Leiterseile an ihrem einen Ende mit einem gemeinsamen Verbindungsschwert verbunden. An der einen Seite des Verbindungsschwertes sind in vorzugsweise äquidistantem Abstand, welcher auf die Abstände der parallelen Umlenkkanäle zueinander angepasst ist, die Leiterseile befestigt. Auf der gegenüber liegenden Seite des Verbindungsschwertes ist mittig ein Zugseil verbunden, mit welchem das Schwert und die Leiterseile über die Umlenkmodule ziehbar sind.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1: exemplarisches System zum Spannen eines Leiterseils,
- Fig. 2: ein exemplarisches erstes Umlenkmodul,
- Fig. 3: eine Rolle mit großem Rollendurchmesser
- Fig. 4: verschiedene Rollenvarianten mit kleinem Rollendurchmesser sowie
- Fig. 5: ein Verbindungsschwert mit vier Leiterseilen und einem Zugseil

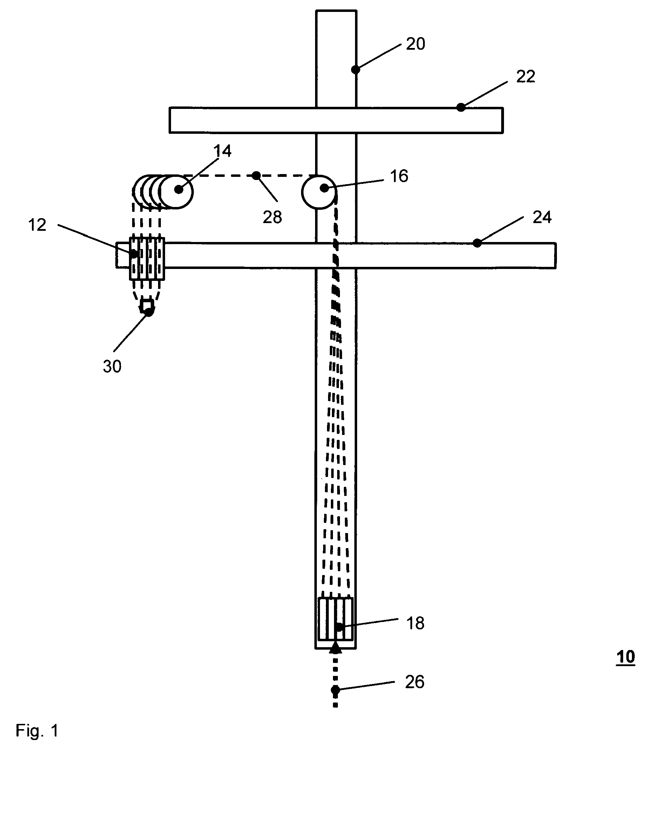

Fig. 1 zeigt ein exemplarisches System 10 zum Spannen eines Leiterseils, in der dargestellten Variante zum synchronen Spannen von vier Leiterseilen 28 auf einen Mast 20, welcher beispielsweise eine Höhe von 30m - 70m aufweist. Der Mast verfügt über zwei Traversen 22, 24, wobei die vier zu spannenden Leiterseile 28 einen zusammen geschalteten Phasenleiter eines 3-phasigen Systems bilden sollen und am äußeren Ende der Traverse 24 von einem nicht gezeigten Isolator gehalten werden sollen. Am Fuße des Mastes 20 werden die vier Leiterseile von einer jeweiligen Leiterseilrolle abgewickelt und bereitgestellt, wie mit dem Pfeil mit der Bezugsnummer 26 angedeutet ist. Über ein viertes Umlenkmodul 18, welches über insgesamt vier parallele Umlenkkanäle verfügt, werden die vier Leiterseile 28 mastnah in eine etwa vertikale Richtung umgelenkt und in den oberen Mastbereich bis zum dort montierten dritten Umlenkmodul 16 geführt, welches seinerseits ebenfalls über vier parallele Umlenkkanäle verfügt. Auf dem Weg nach oben vollzieht die Ebene der vier parallel geführten Leiterseile eine Torsion von ca. 90°, wie in der Zeichnung angedeutet.

Über das dritte Umlenkmodul 16 werden die Leiterseile nunmehr in eine etwa horizontale Richtung umgelenkt und an den linken äußeren Rand der Traverse 24 geführt und dort einem zweiten Umlenkmodul 14 in die Vertikale umgelenkt und dem ersten Umlenkmodul 12 zugeführt. Die jeweiligen Umlenkmodule sind jeweils mit nicht gezeigten Modulhaltern und Distanzelementen mit dem Mast 20 bzw. seinen Traversen 22, 24 verbunden. Nach Spannen der jeweiligen Leiterseile sind die Umlenkmodule wieder zu entfernen.

Alle Umlenkmodule 12, 14, 16, 18 sind mit jeweils vier Umlenkkanälen versehen, wobei jeweils ein Umlenkkanal einem Leiterseil zugeordnet ist. Die Umlenkkanäle sind in diesem Fall als jeweilige drehbare Rolle mit rillenartiger Vertiefung angedeutet, wobei selbstverständlich beispielsweise auch aus mehreren kleineren und auf einer Kreisbahn angeordneten Rollen gebildete polygonähnliche Umlenkkanäle verwendbar sind. Beim zweiten Umlenkmodul 14 ist ein leichter Versatz der parallel angeordneten Umlenkkanäle angedeutet, um die Leiterseile jeweils genau senkrecht dem korrespondierenden Umlenkkanal des ersten Umlenkmoduls 12 zuzuführen. Dies ist aber nicht zwangsläufig notwendig. Es ist auch denkbar, dass - wie auch bei den Umlenkmodulen 12, 16, 18 - alle parallelen Umlenkkanäle um dieselbe gedachte Rotationsachse angeordnet sind.

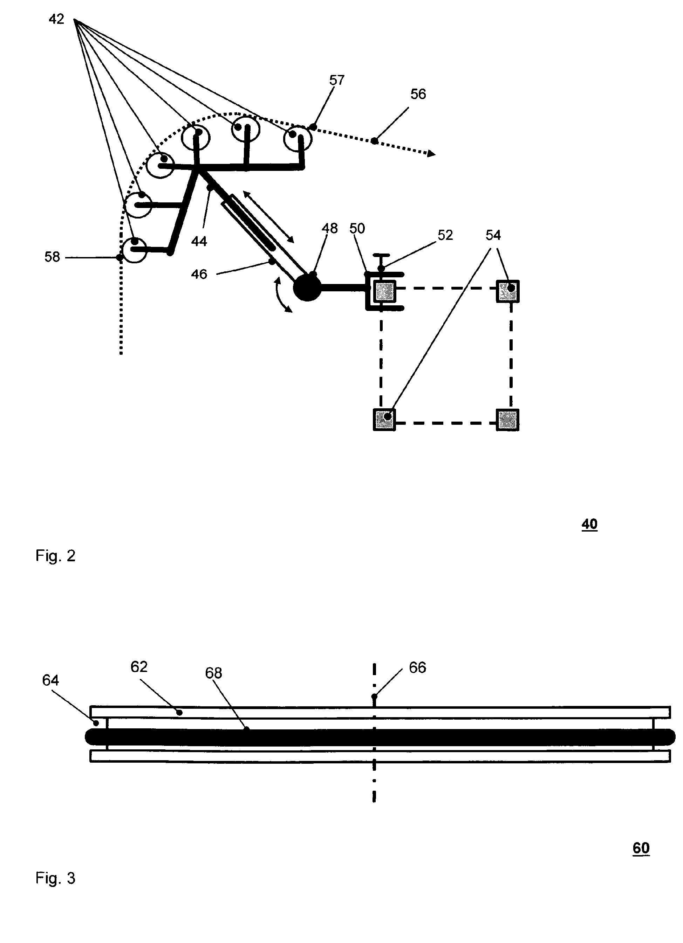

Fig. 2 zeigt ein erstes exemplarisches Umlenkmodul 40. Dieses umfasst einen bogenförmigen Umlenkkanal, dessen beide Enden mit den Bezugsziffern 57 und 58 angedeutet sind. Der bogenförmige Umlenkkanal ist durch mehrere frei drehbare Rollen 42 mit rillenartiger Vertiefung polygonähnlich approximiert, so dass der Mindestbiegeradius des durch den Umlenkkanal 57-58 geführten Leiterseils 56 nicht unterschritten ist. Durch die Verwendung der Rollen 42 ist in besonders einfacher und reibungsarmer Weise eine Bewegung des Leiterseils durch den Umlenkkanal ermöglicht.

Die in diesem Beispiel sechs in einer gemeinsamen Ebene angeordneten drehbaren Rollen 42 sind über einen gemeinsamen Halter mit einem Distanzelement 44 verbunden. Dieses weist zur Geometrieanpassung einen längenverstellbaren Zylinder 46 auf, der in der gewünschten Längenstellung arretierbar ist, beispielsweise durch eine Schraubverbindung. Der längenverstellbare Zylinder 46 seinerseits ist an seinem gegenüberliegenden Ende mit einer Vorrichtung zur Verstellung der Orientierung verbunden, beispielsweise einem Kugelgelenk mit Arretiervorrichtung. Die beiden letztgenannten Vorrichtungen sind optionale Komponenten des Distanzelementes 44, welche eine erhöhte Flexibilität bei der Anordnung des Umlenkmoduls 40 am Hochspannungsmast - in diesem Fall an den Streben 54 einer Traverse - ermöglichen.

Die Vorrichtung zur Verstellung der Orientierung 48 ist mit einem Modulhalter 50 verbunden, welcher kraftschlüssig mit einem Hochspannungsmast bzw. den zugehörigen Streben 54 verbunden ist. In diesem Fall ist eine U-förmige Klammer vorgesehen, welche eine Strebe in ihrem Querschnitt umschließt und über eine Feststellvorrichtung lösbar mit einer Strebe 54 verbunden ist. So lässt sich das Umlenkmodul 40 besonders einfach auf einem Mast montieren - auch aufgrund seines durch Verwendung von mehreren kleineren Rollen reduzierten Gewichtes - und auch wieder demontieren.

Fig. 3 zeigt im Vergleich eine Rolle mit großem Rollendurchmesser 60, welcher zumindest so groß ist, dass der Mindestbiegeradius - beispielsweise 0,8m - des über die Rolle 62 geführten Leiterseils 68 nicht unterschritten ist. Die Rolle 62 ist um die Drehachse 66 drehbar und weist eine rillenähnliche Vertiefung 64 auf, welche in diesem Fall abschnittsweise als Umlenkkanal dient.

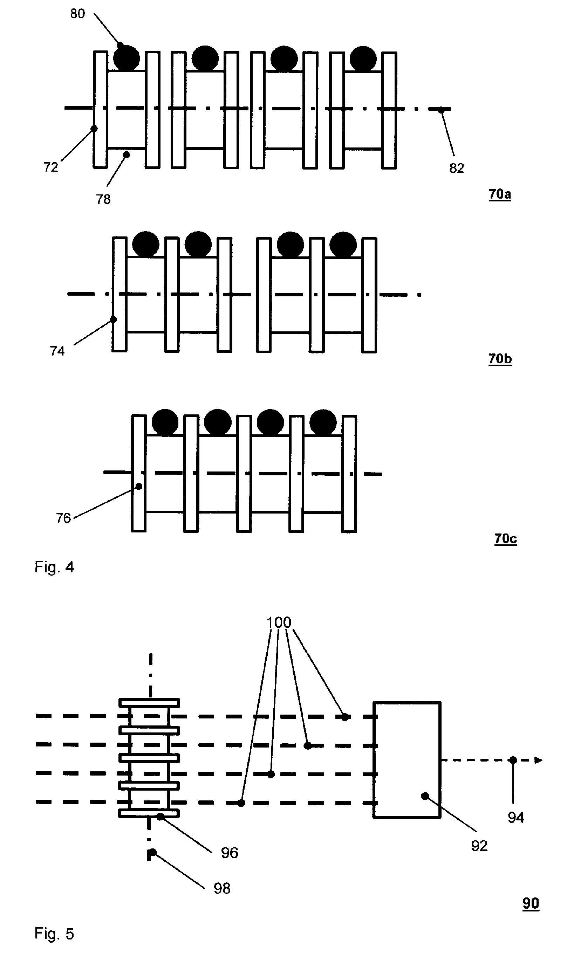

Fig. 4 zeigt verschiedene Rollenvarianten mit kleinem Rollendurchmesser, welche dazu verwendet werden können, die Bogenform von mehreren parallelen Umlenkkanälen polygonähnlich zu approximieren. Mit der Bezugsnummer 70a sind vier um dieselbe Drehachse 82 angeordnete baugleiche Einzelrollen 72 gezeigt, welche in einer jeweiligen rillenähnlichen Vertiefung 78 ein Leiterseil 80 führen.

Mit der Bezugsnummer 70b sind je zwei Doppel- oder Tandemrollen 74 gezeigt, welche jeweils zwei Leiterseile 80 in entsprechenden rillenähnlichen Vertiefungen führen. Mit der Bezugsnummer 70c ist schließlich eine einzige Vierfachrolle 76 dargestellt, welche vier rillenähnliche Vertiefungen 78 aufweist, in welchen jeweils ein Leiterseil 78 geführt ist. Diese Abbildung verdeutlicht, dass der Montageaufwand bei derartigen Mehrfachrollen vorteilhaft reduziert ist. Selbstverständlich sind - neben der gezeigten 4-fach Variante auch beispielsweise 2-, 3- oder 5-fach Varianten denkbar.

Fig. 5 zeigt schließlich mit der Bezugsnummer 90 ein Verbindungsschwert 92 mit vier Leiterseilen 100 und einem Zugseil 94. Die vier Leiterseile 100 sind andeutungsweise noch über eine Vierfachrolle 96 geführt, welche um eine Drehachse 98 drehbar ist. Bei der Verwendung eines solchen Verbindungsschwertes 92 ist es besonders vorteilhaft, wenn die Führung der Leiterseile 100 vom Fuß des Hochspannungsmastes zur Einführungsstelle im oberen Bereich des Mastes, also in Zugrichtung kurz vor dem Isolator, welcher den Leiter tragen soll, in zueinander parallelen Ebenen erfolgt. Dann kann das Verbindungsschwert 92 mit dem Zugseil 94 problemlos vom unteren Bereich des Hochspannungsmastes über alle Umlenkmodule bis in den oberen Bereich des Hochspannungsmastes und von da zu allen weiteren Hochspannungsmasten gezogen werden, wobei es die in diesem Fall vier Leiterseile nach sich durch alle Umlenkkanäle zieht.

Selbstverständlich sind auch weitere Leiterseilführungsvarianten, wie z.B. in Fig. 1 dargestellt, mit einem solchen Verbindungsschwert 92 realisierbar, es könnte aber ggf. einen gewissen Zusatzaufwand bei der Führung des Verbindungsschwertes in den oberen Mastbereich bedeuten.

### Bezugszeichenliste

- 10: exemplarisches System zum Spannen eines Leiterseils
- 12: erstes Umlenkmodul mit vier Umlenkkanälen
- 14: zweites Umlenkmodul mit vier Umlenkkanälen
- 16: drittes Umlenkmodul mit vier Umlenkkanälen
- 18: viertes Umlenkmodul mit vier Umlenkkanälen
- 20: Hochspannungsmast
- 22: erste Traverse
- 24: zweite Traverse
- 26: Leiterseile abgewickelt von Seiltrommeln
- 28: Leiterseile
- 30: rechteckige Leiteranordnung
- 40: exemplarisches erstes Umlenkmodul
- 42: frei drehbare Rollen mit rillenförmiger Vertiefung
- 44: Distanzelement
- 46: Längenverstellvorrichtung des Distanzelementes
- 48: Orientierungsverstellvorrichtung des Distanzelementes
- 50: Modulhalter mit Verbindungsvorrichtung
- 52: Feststellvorrichtung der Verbindungsvorrichtung
- 54: Streben einer Traverse eines Hochspannungsmastes
- 56: Leiterseil
- 57: erstes Ende des Umlenkkanals
- 58: zweites Ende des Umlenkkanals
- 60: Rolle eines Umlenkmoduls mit Leiterseil
- 62: einzige frei drehbare Rolle
- 64: Umlenkkanal ausgeprägt in einer rillenförmigen Vertiefung
- 66: Drehachse
- 68: Leiterseil
- 70a: vier parallele Einzelrollen eines exemplarischen Umlenkmoduls
- 70b: zwei Doppelrollen eines exemplarischen Umlenkmoduls
- 70c: eine Vierfachrolle eines exemplarischen Umlenkmoduls
- 72: Einzelrolle
- 74: Tandemrolle
- 76: Vierfachrolle
- 78: Umlenkkanal ausgeprägt in einer rillenförmigen Vertiefung
- 80: Leiterseil
- 82: Drehachse
- 90: Verbindungsschwert mit Leiterseilen und Zugseil
- 92: Verbindungsschwert
- 94: Zugseil
- 96: Vierfachrolle eines exemplarischen Umlenkmoduls
- 98: Drehachse
- 100: Leiterseile

## Patentansprüche

1. Umlenkmodul (12, 14, 16, 18, 40) für ein Hochspannungsleiterseil (28, 56, 68, 80, 100), umfassend einen bogenförmigen Umlenkkanal (57-58, 64, 78), welcher derart ausgeprägt ist, dass ein Leiterseil (28, 56, 68, 80, 100) in diesem (57-58, 64, 78) längs seiner Erstreckung beweglich führbar ist, einen Modulhalter (50) mit Verbindungsvorrichtung, welcher dafür vorgesehen ist, lösbar mit einem Hochspannungsmast (20, 22, 24, 54) verbunden zu werden und ein Distanzelement (44), durch welches eine mechanisch starre Verbindung zwischen Umlenkkanal (57-58, 64, 78) und Modulhalter (50) gebildet ist.

2. Umlenkmodul nach Anspruch 1, **dadurch gekennzeichnet, dass** der Umlenkkanal (57-58, 64, 78) zumindest abschnittsweise durch einen jeweiligen Segmentabschnitt einer frei drehbaren Rolle (42, 62, 72, 74, 76, 96) mit rillenförmiger Vertiefung (64, 78) zur Führung des Leiterseils (28, 56, 68, 80, 100) längs ihres Umfangs gebildet ist.

3. Umlenkmodul nach Anspruch 2, **dadurch gekennzeichnet, dass** mehrere parallel in einer gemeinsamen Ebene und längs eines Bogens angeordnete frei drehbare Rollen (42) vorgesehen sind, so dass längs des Bogens ein polygonähnlicher Umlenkkanal für ein Leiterseil (28, 56, 68, 80, 100) gebildet ist.

4. Umlenkmodul nach einem der vorherigen Ansprüche, **dadurch gekennzeichnet, dass** mehrere parallel angeordnete Umlenkkanäle vorgesehen sind (12, 14, 16, 18).

5. Umlenkmodul nach Anspruch 4, **dadurch gekennzeichnet, dass** längs derselben Drehachse (82) angeordnete frei drehbare Rollen (72) benachbarter Umlenkkanäle durch eine gemeinsame frei drehbare Rolle (74, 76) mit einer entsprechenden Anzahl an parallelen rillenförmiger Vertiefungen (76) substituiert sind.

6. Umlenkmodul nach einem der vorherigen Ansprüche, **dadurch gekennzeichnet, dass** das Distanzelement (44) anpassbar (46, 48) ist, so dass ein wählbarer Abstand und/oder eine wählbare Ausrichtung des Umlenkkanals (57, 58) zum Modulhalter (50) ermöglicht ist.

7. System (10) zum Spannen eines Leiterseils (28, 56, 68, 80, 100) auf Hochspannungsmasten, umfassend einen Hochspannungsmast (20, 22, 24, 54) und wenigstens ein erstes mit diesem verbundenes Umlenkmodul (12, 40) nach einem der Ansprüche **1** - **6.**

8. System nach Anspruch 7, **dadurch gekennzeichnet, dass** das erste Umlenkmodul (12, 40) derart am Hochspannungsmast (20, 22, 24, 54) angeordnet ist, dass das erste Ende des Umlenkkanals (57) des ersten Umlenkmoduls (40) in der gedachten Verlängerung des zu spannenden Leiterseils (56) in seiner gewünschten Position am Hochspannungsmast (20, 22, 24, 54) ausgerichtet ist und das zweite Ende des Umlenkkanals (58) vorzugsweise in vertikaler Ausrichtung.

9. System nach Anspruch 7 und 8, **dadurch gekennzeichnet, dass** weitere Umlenkmodule (14, 16, 18) derart am Hochspannungsmast (20, 22, 24, 54) angeordnet sind, dass ein mit einer Zugkraft beaufschlagtes Leiterseil (28) vom Fuß des Hochspannungsmastes mastnah zu einer im oberen Bereich befindlichen Traverse (22, 24) und von dort längs der Traverse zum zweiten Ende (58) des Umlenkkanals des ersten Umlenkmoduls (12, 40) beweglich führbar ist.

10. System nach Anspruch 7 und 8, **dadurch gekennzeichnet, dass** weitere Umlenkmodule am Hochspannungsmast (20, 22, 24, 54) angeordnet sind und die Umlenkkanäle aller Umlenkmodule für ein jeweiliges Leiterseil in derselben Ebene angeordnet sind.

11. System nach einem der Ansprüche 7 - 10, **dadurch gekennzeichnet, dass** Umlenkmodule mit mehreren parallel angeordneten Umlenkkanälen (12, 14, 16, 18) vorgesehen sind, so dass mehrere an ihrem jeweiligen einen Ende miteinander verbundene Leiterseile (100) gemeinsam über die Umlenkmodule ziehbar sind.

12. System nach Anspruch 10, **dadurch gekennzeichnet, dass** zur Verbindung der Leiterseile (100) an ihrem einen Ende ein Verbindungsschwert (92) vorgesehen ist.
